# FASCICULE DE BREVET EUROPEEN

(11) **EP 1 634 518 B1**
(45) Date de publication et mention de la délivrance du brevet: **14.11.2007**
(21) Numéro de dépôt: 05356150.2
(22) Date de dépôt: 09.09.2005
(51) Int. Cl.: A47J 27/09

(54) **Appareil de cuisson sous pression a securite amelioree**
Druckkochgerät mit verbesserter Sicherheit
Pressure cooking device with improved security

(30) Priorité: 09.09.2004 FR 0409595
(43) Date de publication de la demande: 15.03.2006
(73) Titulaire: SEB S.A., 69132 Ecully (FR)
(72) Inventeur: Anota, Daniel, Jean-Marie, 21000 Dijon (FR); Chameroy, Eric, 21260 Veronnes (FR)
(74) Mandataire: Martin, Didier Roland Valéry

(56) Documents cités:
- EP-A- 1 029 483
- FR-A- 2 816 491

## Description

La présente invention se rapporte au domaine technique général des appareils de cuisson d'aliments, et plus particulièrement des appareils domestiques destinés à former une enceinte de cuisson sensiblement étanche pour assurer la cuisson sous pression de vapeur d'aliments.

La présente invention concerne plus particulièrement un appareil domestique de cuisson d'aliments sous pression comprenant :
- une cuve et un couvercle destiné à être rapporté et verrouillé sur ladite cuve pour former une enceinte de cuisson sensiblement étanche,
- un moyen de verrouillage / déverrouillage du couvercle relativement à la cuve, monté mobile sur le couvercle entre d'une part une position de verrouillage et d'autre part une position de déverrouillage,
- un moyen de commande du déplacement du moyen de verrouillage / déverrouillage, monté mobile entre d'une part une position d'ouverture correspondant à la position de déverrouillage du moyen de verrouillage / déverrouillage et d'autre part une position de fermeture correspondant à la position de verrouillage du moyen de verrouillage / déverrouillage.

On connaît déjà des récipients domestiques de cuisson sous pression comprenant une cuve et un couvercle destiné à être verrouillé sur la cuve par l'intermédiaire d'un moyen de verrouillage / déverrouillage susceptible d'évoluer entre une position de verrouillage du couvercle sur la cuve et une position de déverrouillage dudit couvercle.

On connaît en particulier des récipients de cuisson dont le moyen de verrouillage /déverrouillage est formé par un système de mâchoires diamétralement opposées, lesdites mâchoires pouvant se déplacer en translation radiale entre une position de verrouillage, dans laquelle elles enserrent les rebords périphériques de la cuve et du couvercle, et d'autre part une position de déverrouillage, dans laquelle elles libèrent lesdits rebords périphériques, afin de permettre la séparation du couvercle et de la cuve.

La commande du mouvement des mâchoires est effectuée, sur ces appareils connus, à l'aide d'un système de rampes obliques, ménagées dans une pièce intermédiaire rotative et coopérant avec des pions solidaires des mâchoires.

Ainsi, lorsque sur commande de l'utilisateur la pièce rotative tourne, les rampes exercent une poussée radiale sur les pions, poussée qui provoque le verrouillage ou le déverrouillage des mâchoires, par translation radiale de ces dernières.

Le système de commande par rampes / ergots mis en oeuvre dans ces appareils connus présente intrinsèquement un caractère réversible, c'est-à-dire que si la rotation de la pièce intermédiaire permet de commander le déplacement des ergots et donc des mâchoires, le déplacement radial des ergots peut provoquer à l'inverse la rotation de la pièce intermédiaire.

Ce caractère réversible peut présenter des inconvénients, en particulier en matière de sécurité d'utilisation. En effet, un tel appareil de cuisson pourrait subir des déformations importantes sous l'effet d'une surpression accidentelle, déformation qui pourrait conduire au déplacement des ergots vers la position de déverrouillage. Un tel déverrouillage pourrait alors engendrer l'échappement brutal du couvercle, avec toutes les conséquences néfastes que cela pourrait engendrer.

Un tel événement reste cependant généralement improbable pour la plupart des autocuiseurs connus, qui sont équipés de multiples dispositifs de sécurité à la surpression.

Il n'en reste pas moins que l'emploi de la cinématique de commande, par ailleurs particulièrement intéressante, décrite précédemment reste délicat, et ne peut être en particulier adopté pour des appareils susceptibles de présenter des déformations importantes lors de leur fonctionnement normal, tels que des cuiseurs à couvercle rentrant.

Enfin, la cinématique de commande mettant en oeuvre une pièce intermédiaire rotative décrite précédemment, impose parfois à l'utilisateur d'exercer un effort manuel très important pour parvenir au déverrouillage de l'appareil. En effet, sous l'effet de la pression régnant dans l'enceinte de cuisson, et même lorsque cette pression est relativement faible et peut permettre une ouverture sécurisée du couvercle, les ergots associés aux mâchoires vont avoir tendance à pousser radialement contre les rampes. Il sera alors difficile pour l'utilisateur de parvenir à faire tourner la pièce intermédiaire, afin de ramener les ergots en position de déverrouillage.

On connaît par ailleurs du document FR-2 816 491 un appareil conforme au préambule de la revendication 1.

Les objets assignés à l'invention visent en conséquence à porter remède aux différents inconvénients énumérés précédemment et à proposer un nouvel appareil domestique de cuisson d'aliments sous pression dont l'utilisation est particulièrement sûre et simple.

Un autre objet de l'invention vise à proposer un nouvel appareil domestique de cuisson d'aliments sous pression particulièrement fiable en terme de sécurité.

Un autre objet de l'invention vise à proposer un nouvel appareil domestique de cuisson d'aliments sous pression mettant en oeuvre un moyen de verrouillage / déverrouillage standard.

Un autre objet de l'invention vise à proposer un nouvel appareil domestique de cuisson d'aliments sous pression de conception particulièrement simple et économique.

Un autre objet de l'invention vise à proposer un nouvel appareil domestique de cuisson d'aliments sous pression dont l'utilisation ne nécessite qu'une gestuelle simple et intuitive.

Un autre objet de l'invention vise à proposer un nouvel appareil domestique de cuisson d'aliments sous pression particulièrement robuste.

Un autre objet de l'invention vise à proposer un nouvel appareil domestique de cuisson d'aliments sous pression dont le fonctionnement est basé sur des principes mécaniques simples et éprouvés.

Un autre objet de l'invention vise à proposer un nouvel appareil domestique de cuisson d'aliments sous pression dont le verrouillage du couvercle sur la cuve est particulièrement robuste et sûr, tout en ne nécessitant qu'un minimum d'effort de la part de l'utilisateur pour le déverrouillage.

Un autre objet de l'invention vise à proposer un nouvel appareil domestique de cuisson d'aliments sous pression constitué d'un minimum de pièces.

Un autre objet de l'invention vise à proposer un nouvel appareil domestique de cuisson d'aliments sous pression présentant un excellent compromis en terme de légèreté et de sécurité.

Un autre objet de l'invention vise à proposer un nouvel appareil domestique de cuisson d'aliments sous pression de construction particulièrement compacte.

Un autre objet de l'invention vise à proposer un nouvel appareil domestique de cuisson d'aliments sous pression dont le couvercle et la cuve sont agencés pour permettre un positionnement particulièrement facile du couvercle sur la cuve.

Les objets assignés à l'invention sont atteints à l'aide d'un appareil domestique de cuisson d'aliments sous pression comprenant :
- une cuve et un couvercle destiné à être rapporté et verrouillé sur ladite cuve pour former une enceinte de cuisson sensiblement étanche,
- un moyen de verrouillage / déverrouillage du couvercle relativement à la cuve, monté mobile sur le couvercle entre d'une part une position de verrouillage et d'autre part une position de déverrouillage,
- un moyen de commande du déplacement du moyen de verrouillage / déverrouillage, monté mobile entre d'une part une position d'ouverture correspondant à la position de déverrouillage du moyen de verrouillage / déverrouillage et d'autre part une position de fermeture correspondant à la position de verrouillage du moyen de verrouillage / déverrouillage,
caractérisé en ce qu'il comprend un moyen de blocage, monté mobile entre d'une part une position de blocage du moyen de verrouillage / déverrouillage en position de verrouillage et d'autre part une position de libération du moyen de verrouillage / déverrouillage autorisant le moyen de verrouillage / déverrouillage à atteindre sa position de déverrouillage, ledit moyen de blocage coopérant avec le moyen de commande pour que le déplacement du moyen de commande de sa position de fermeture vers sa position d'ouverture entraîne le passage du moyen de blocage de sa position de blocage à sa position de libération.

D'autres particularités et avantages de l'invention apparaîtront et ressortiront plus en détails à la lecture de la description faite ci-après, en référence aux dessins annexés, donnés à titre d'exemples illustratifs et non limitatifs dans lesquels :
- La figure 1 représente, selon une vue schématique générale en perspective, un appareil domestique de cuisson conforme à l'invention.
- La figure 2 illustre, selon une vue schématique en perspective, le couvercle d'un appareil de cuisson conforme à l'invention, équipé de son moyen de verrouillage / déverrouillage.
- La figure 3 illustre, selon une vue schématique en perspective, le siège d'un module de commande destiné à être rapporté sur le couvercle d'un appareil de cuisson conforme à l'invention, et dans lequel est monté le moyen de blocage.
- La figure 4 illustre, selon une vue schématique en perspective, le siège du module de la figure 3, dans lequel est monté, outre le moyen de blocage, le moyen de commande du déplacement du moyen de verrouillage / déverrouillage.
- La figure 5 illustre, selon une vue de dessus, le module de commande lorsque l'autocuiseur se trouve en configuration déverrouillée.
- La figure 6 illustre, selon une vue de dessus, un détail du module représenté à la figure 5.
- La figure 7 illustre, selon une vue de dessus, le module de la figure 5 lorsque l'appareil de cuisson se trouve en configuration de décompression verrouillée.
- La figure 8 illustre, selon une vue de dessus, un détail de réalisation du module de la figure 7.
- La figure 9 illustre, selon une vue de dessus, le module des figures 5 et 7 lorsque l'appareil de cuisson se trouve en configuration verrouillée étanche.
- La figure 10 illustre, selon une vue de dessus, un détail de réalisation du module de la figure 9.
- La figure 11 illustre, selon une vue de dessus, le siège du module représenté aux figures 7 à 10 et sur lequel est monté le moyen de blocage.

L'appareil de cuisson 1 conforme à l'invention est destiné à assurer la cuisson de différents aliments, sous pression, dans un contexte domestique.

De façon préférentielle, l'appareil domestique 1 de cuisson d'aliments sous pression conforme à l'invention est un autocuiseur.

De façon classique, l'appareil de cuisson 1 conforme à l'invention comprend une cuve 2 formant récipient de cuisson et fabriquée par exemple à partir d'un matériau métallique tel que l'acier inoxydable.

La cuve 2 comprend préférentiellement un fond de cuve, à partir duquel s'élève une paroi latérale 2A.

De façon préférentielle, la cuve 2 est pourvue d'un fond thermo-conducteur 2B, solidarisé à la cuve par frappe à chaud par exemple.

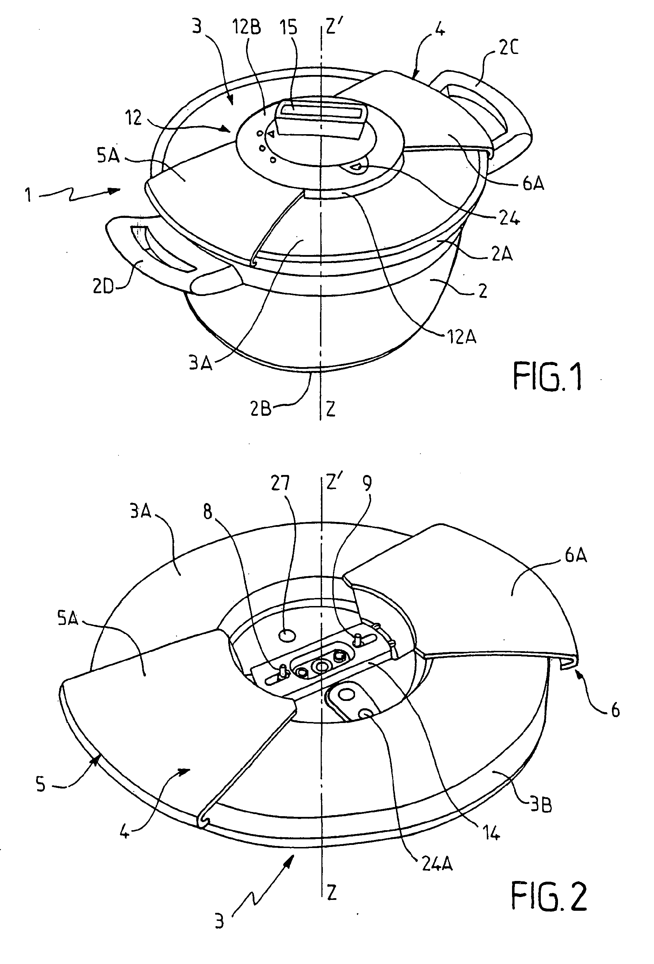

La cuve 2 peut comporter également des organes de préhension, tels que des poignées 2C, 2D, préférentiellement au nombre de deux, et fixées sur la cuve 2 de façon diamétralement opposée par exemple (cf. figure 1).

L'appareil de cuisson conforme à l'invention comprend également un couvercle 3 destiné à être rapporté et verrouillé sur la cuve 2 pour former avec cette dernière une enceinte de cuisson sensiblement étanche, c'est-à-dire suffisamment hermétique pour permettre une montée en pression de l'appareil 1.

Le couvercle 3 présente une forme complémentaire à celle de la cuve 2 et forme avec cette dernière une enceinte de cuisson présentant de préférence sensiblement une symétrie de révolution selon un axe vertical Z-Z' (cf. figure 1).

Par la suite, les adjectifs « axial » ou « vertical » se référeront à la direction de cet axe vertical de symétrie Z-Z', direction sensiblement confondue avec la direction verticale lorsque l'appareil 1 est en fonctionnement normal.

Dans l'exemple de réalisation illustré aux figures, le couvercle 3 se présente ainsi sous la forme d'une tôle discoïde 3A pourvue d'un rebord périphérique latéral tombant 3B.

Avantageusement, et tel que cela est représenté aux figures, la cuve 2 et le couvercle 3 sont conçus l'un relativement à l'autre pour former une enceinte de cuisson à couvercle rentrant. En d'autres termes, le rebord latéral tombant 3B du couvercle 3 est positionné, en fonctionnement, à l'intérieur de la cuve 2, de façon à être complètement entourée par la paroi latérale 2A de ladite cuve 2.

Il est cependant tout à fait envisageable, sans pour autant sortir du cadre de l'invention, que le couvercle 3 ne soit pas rentrant mais au contraire de type classique, et vienne coiffer le bord périphérique de la cuve 2. Dans ce cas, en position de fonctionnement, le rebord latéral tombant 3B du couvercle 3 est situé à l'extérieur de la cuve 2, et entoure latéralement la paroi latérale 2A de la cuve 2.

Conformément à l'invention, l'appareil de cuisson 1 comprend également un moyen de verrouillage / déverrouillage 4 du couvercle 3 relativement à la cuve 2, monté mobile sur le couvercle 3 entre d'une part une position de verrouillage, dans laquelle le couvercle 3 est solidarisé mécaniquement à la cuve 2, et d'autre part une position de déverrouillage, dans laquelle le couvercle 3 peut être séparé de la cuve 2.

Le moyen de verrouillage / déverrouillage 4 peut être, dans le cadre de l'invention, de tout type connu de l'homme du métier.

Avantageusement, le moyen de verrouillage / déverrouillage 4 est monté en translation radiale sur le couvercle 3 relativement à l'axe de symétrie Z-Z', entre sa position de verrouillage et sa position de déverrouillage qui sont, toutes deux, de préférence des positions indexées, et par exemple des positions de butée.

Avantageusement, et tel que cela est représenté aux figures, le moyen de verrouillage / déverrouillage 4 comprend au moins une mâchoire 5, 6 destinée à enserrer les bords périphériques de cuve 2 et de couvercle 3.

Ladite mâchoire peut se présenter sous la forme d'une plaque métallique profilée en U à son extrémité extérieure, tel que cela est bien connu de l'homme du métier. L'invention n'est cependant pas limitée à ce mode de verrouillage particulier, et peut par exemple mettre en oeuvre, à titre de moyen de verrouillage / déverrouillage, un système de segment. Un tel système est bien connu de l'homme du métier et consiste en la coopération, à la manière d'un système pêne / gâche, de barrettes mobiles en translation solidaire du couvercle et de lumières correspondantes ménagées dans la paroi de la cuve. En position de verrouillage, les barrettes sont engagées dans les lumières correspondantes pour empêcher tout mouvement du couvercle, tandis qu'en position de déverrouillage les barrettes sont rétractées et ne coopèrent pas avec les lumières.

Dans ce qui suit, on se limitera à décrire, pour des raisons de simplicité de la description, un appareil 1 muni d'un système à mâchoires.

De façon préférentielle, tel que cela est représenté plus particulièrement aux figures 1 et 2, l'appareil 1 conforme à l'invention comprend deux mâchoires 5, 6 positionnées en vis-à-vis, de préférence de manière diamétralement opposée en regard de l'axe vertical de symétrie Z-Z' de l'appareil 1.

Le déplacement de chacune des mâchoires 5, 6 est effectué par l'intermédiaire d'un bras respectif 5A, 6A, relié à la mâchoire correspondante 5, 6.

Dans le mode de réalisation représenté aux figures, le bras 5A, 6A vient de matière avec la mâchoire correspondante 5, 6.

L'appareil 1 conforme à l'invention comprend également un moyen de commande 7 du déplacement du moyen de verrouillage / déverrouillage 4.

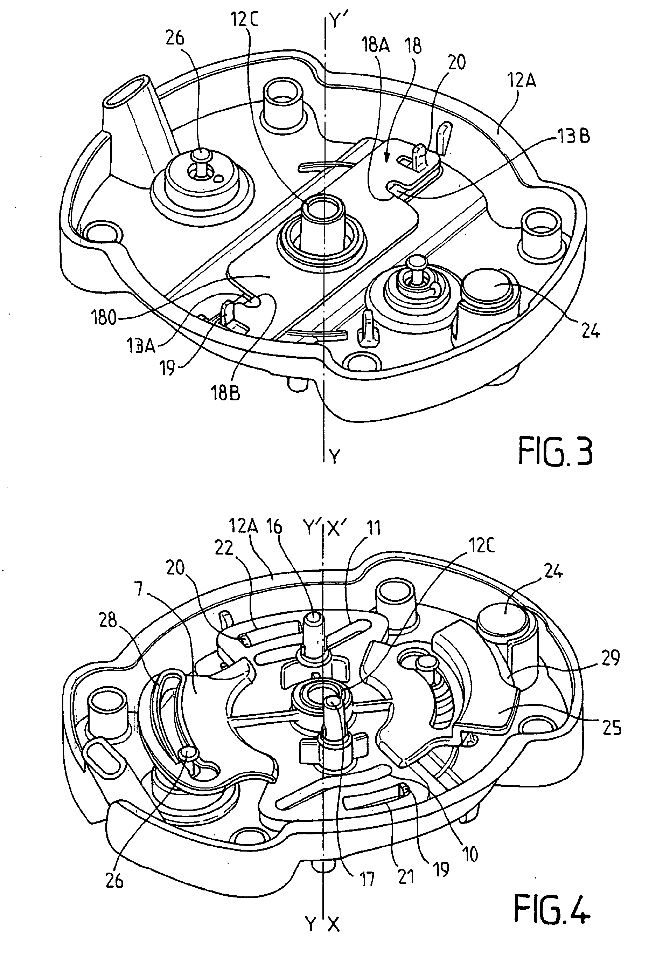

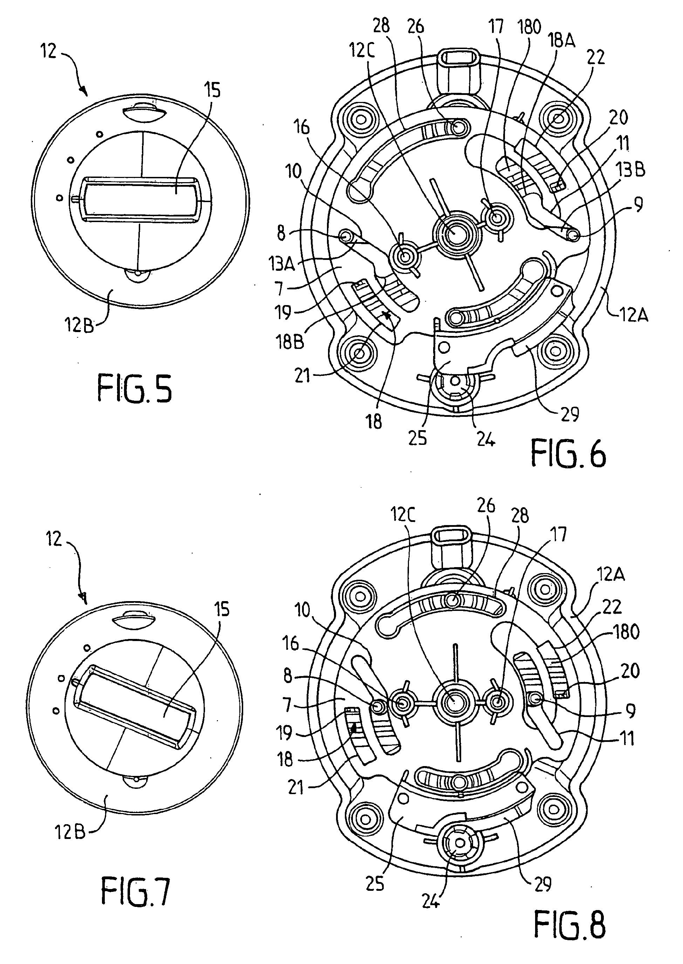

Ledit moyen de commande 7 est monté mobile entre d'une part au moins une position d'ouverture (représentée à la figure 6), ladite position correspondant à la position de déverrouillage du moyen de verrouillage / déverrouillage 4 et d'autre part au moins une position de fermeture (représentée aux figures 4, 8, 10 et 11), ladite position correspondant à la position de verrouillage du moyen de verrouillage / déverrouillage 4.

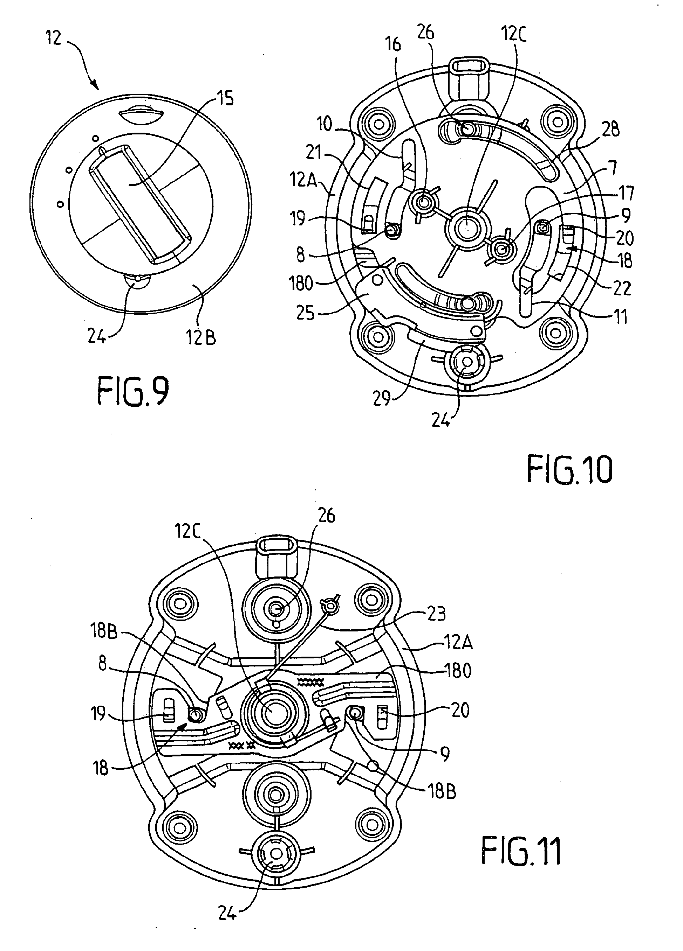

Le moyen de commande 7 peut comporter plusieurs positions de déverrouillage et/ou plusieurs positions de verrouillage. Ainsi, comme cela sera décrit plus en détails ci-après, le moyen de commande 7 de l'exemple représenté aux figures comprend une position prédéterminée de déverrouillage, représentée à la figure 6, et deux positions prédéterminées de verrouillage, représentées respectivement aux figures 8 et 10.

Dans l'exemple de réalisation illustré aux figures, le moyen de commande 7 présente un caractère rotatif. En particulier, le moyen de commande 7 est monté en rotation sur le couvercle 3 selon un premier axe de rotation X-X', lequel est de préférence parallèle à l'axe vertical de symétrie Z-Z', et encore plus préférentiellement confondu avec ce dernier. La rotation du moyen de commande 7 autour du premier axe X-X' permet ainsi de commander le déplacement du moyen de verrouillage / déverrouillage 4, c'est-à-dire, dans l'exemple représenté aux figures, la translation radiale des mâchoires 5, 6.

Avantageusement, afin de réaliser la commande du déplacement du moyen de verrouillage / déverrouillage 4 par le moyen de commande 7, le moyen de verrouillage / déverrouillage 4 comprend au moins un pion d'entraînement 8, 9, tandis que le moyen de commande 7 comprend au moins une rampe d'entraînement 10, 11 correspondante coopérant avec ledit pion d'entraînement 8, 9. Grâce à ce système classique d'entraînement rampe / pion, le mouvement de rotation du moyen de commande 7 induit un mouvement de translation des pions 8, 9 et donc des mâchoires correspondantes 5, 6.

Avantageusement, et tel que cela est illustré aux figures, le moyen de commande 7 se présente sous la forme d'un volant monté dans un module de commande 12 unitaire et indépendant. Ledit module 12 est monté, de préférence de façon amovible, sur le couvercle 3, par exemple par vissage.

Le module de commande 12 comprend un siège 12A, réalisé de préférence en matière plastique, et pourvu d'un axe 12C formant un premier axe de rotation X-X', sur lequel est monté le moyen de commande 7. Le siège 12A est doté de rainures traversantes radiales rectilignes 13A, 13B ménagées de façon diamétralement opposée relativement à l'axe X-X' et destinées à accueillir les pions d'entraînement 8, 9. Chacun desdits pions 8, 9 est lui-même solidaire d'un bras indépendant d'entraînement correspondant 5A, 6A. Lesdits pions 8, 9 sont guidés en translation sur le couvercle 3 grâce à une plaque de guidage 14 au sein de laquelle sont ménagées des trous oblongs de guidage. Chaque pion 8, 9 peut ainsi coulisser dans le trou oblong de guidage correspondant.

Avantageusement, le siège 12A du module de commande 12 est coiffé d'un capot 12B au sein duquel est ménagée un logement central destiné à accueillir une poignée de commande 15 actionnable par l'utilisateur. La poignée de commande 15 est rendue solidaire du moyen de commande 7 grâce à un dispositif de fixation, comprenant par exemple deux quilles de fixation 16, 17 s'étendant verticalement à partir du moyen de commande 7 et coopérant avec deux ouvertures correspondantes ménagées dans la poignée 15. Ainsi, lorsque l'utilisateur tourne la poignée 15, il engendre la rotation du moyen de commande 7, lequel, grâce aux rampes 10, 11, déplace en translation radiale les pions 8, 9 et donc les mâchoires 5, 6.

Selon une caractéristique importante de l'invention, l'appareil domestique de cuisson d'aliments 1 comprend un moyen de blocage 18, visible plus particulièrement sur les figures 3 et 11. Ledit moyen de blocage 18 est monté mobile entre d'une part une position de blocage du moyen de verrouillage / déverrouillage 4 en position de verrouillage et d'autre part une position de libération du moyen de verrouillage / déverrouillage 4, autorisant ledit moyen de verrouillage / déverrouillage 4 à atteindre sa position de déverrouillage.

En d'autres termes, la fonction de commande du déplacement du moyen de verrouillage / déverrouillage 4 et la fonction de maintien en position du moyen de verrouillage / déverrouillage 4 sont réalisées à l'aide de moyens respectifs distincts, à savoir respectivement un moyen de commande 7 et un moyen de blocage 18. Cette disposition technique permet notamment de se prémunir contre tout déverrouillage intempestif ou tout grippage du moyen de commande qui pourrait résulter de l'exercice d'un effort radial centripète ou centrifuge sur les pions 8, 9.

Avantageusement, le moyen de blocage 18 est monté en rotation sur le couvercle 3, selon un deuxième axe de rotation Y-Y', de préférence sensiblement parallèle à l'axe vertical de symétrie Z-Z', et encore plus préférentiellement confondu avec ce dernier.

De façon préférentielle, le moyen de blocage 18 se présente sous la forme d'un volet rotatif 180 monté coaxialement au moyen de commande 7 et interposé entre le siège 12A et ledit moyen de commande 7.

Le moyen de blocage 18 et le moyen de commande 7 sont ainsi montés de manière superposée selon un axe de rotation commun X-X', Y-Y', Z-Z'.

Dans la forme préférentielle représentée aux figures, le moyen de blocage 18 est muni d'au moins deux encoches de blocage 18A, 18B, destinées à coopérer avec les pions d'entraînement correspondants 8, 9 du moyen de verrouillage / déverrouillage 4.

Ainsi, lorsque le moyen de blocage 18 est en position de blocage, les pions 8, 9 sont enserrés par les encoches respectives 18A, 18B, ce qui empêche toute translation radiale desdits pions 8, 9. En position de libération, les pions 8, 9 sont dégagés de l'emprise des encoches 18A, 18B, et peuvent ainsi librement se déplacer en translation radiale.

Dans l'exemple illustré aux figures, le moyen de blocage 18 est formé par une pièce unique en forme de plaque, à savoir le volet 180, qui agit à la fois sur le pion 8 et sur le pion 9. Il est cependant tout à fait envisageable que le moyen de blocage 18 comprenne plusieurs pièces distinctes et indépendantes, dédiées chacune à un seul pion et donc à une seule mâchoire.

Le mode de réalisation représenté aux figures s'avère cependant particulièrement intéressant du point de vue de la sécurité et de la facilité d'utilisation comme cela va être expliqué dans ce qui suit.

En effet, dans ce mode de réalisation, le moyen de verrouillage / déverrouillage 4 comprend au moins deux bras indépendants 5A, 6A positionnés sur le couvercle 3 de façon sensiblement diamétralement opposée relativement à l'axe vertical de symétrie Z-Z' lorsque le moyen de verrouillage / déverrouillage 4 se trouve en position de verrouillage. Quant au moyen de blocage 18, il est agencé pour assurer, lorsqu'il se trouve en position de blocage et tandis que le moyen de verrouillage / déverrouillage 4 se trouve en position de verrouillage, une liaison mécanique entre lesdits deux bras 5A, 6A pour les bloquer en position.

L'invention permet ainsi, dans ce mode de réalisation particulièrement avantageux, d'obtenir une continuité mécanique du moyen de verrouillage / déverrouillage 4, en liant entre elles les mâchoires opposées 5, 6 à l'aide d'une pièce distincte du moyen de commande 7.

Ainsi, quand bien même les pions 8, 9 seraient soumis à un effort centrifuge et/ou centripète, du fait par exemple des déformations provenant de la mise en pression de l'appareil, cet effort serait transmis uniquement au moyen de blocage 18, et non au moyen de commande 7. Cela permet à l'utilisateur de faire tourner le moyen de commande 7 vers la position de déverrouillage en exerçant un effort modéré, ce qui ne serait bien entendu pas le cas si le moyen de commande 7 était lui-même soumis directement à l'effort radial exercé par les pions 8, 9.

Cette disposition technique s'avère particulièrement intéressante dans le cas d'un appareil à couvercle 3 rentrant. En effet, un couvercle rentrant est soumis à des niveaux de déformation particulièrement importants lorsque l'appareil monte en pression, qui peuvent donc engendrer des efforts importants au niveau des mâchoires 5, 6 et donc des pions 8, 9. Ces déformations proviennent généralement de l'effort vertical dirigé vers le haut que génère la pression sur le couvercle, ce dernier ayant tendance à se soulever et à fléchir.

Grâce à l'établissement d'un pont de maintien entre les mâchoires, réalisé par le moyen de blocage 18, la mise en tension des mâchoires ne crée cependant pas de résistance mécanique sensible au niveau du moyen de commande 7.

Avantageusement, le moyen de blocage 18 est réalisé en un matériau métallique, tandis que le moyen de commande 7 est réalisé en matière plastique. Cette disposition technique permet d'optimiser l'appareil en terme de masse, tout en lui conférant une excellente résistance mécanique, gage de sécurité. En effet, conformément à l'invention, la pièce de commande 7 est dépourvue de fonction de blocage du moyen de verrouillage / déverrouillage 4. Elle peut dès lors être réalisée dans une matière plastique, légère par nature. La fonction de blocage étant exclusivement assurée par le moyen de blocage 18, ce dernier sera de préférence réalisé en un matériau à haute résistance mécanique, tel qu'un matériau métallique. Ainsi, l'ensemble des pièces de commande sera de préférence réalisé en matière plastique, tandis que l'ensemble des pièces de verrouillage (mâchoires, bras, pions, moyens de blocage) sera de préférence réalisé en un matériau métallique.

Conformément à l'invention, le moyen de blocage 18 coopère fonctionnellement avec le moyen de commande 7 pour que le déplacement dudit moyen de commande 7 de sa position de fermeture vers sa position d'ouverture entraîne le passage du moyen de blocage 18 de sa position de blocage à sa position de libération.

En d'autres termes, le moyen de commande 7 assure une double fonction, puisqu'il permet d'une part de commander le déplacement du moyen de verrouillage / déverrouillage 4 et d'autre part de commander le déplacement du moyen de blocage 18. Grâce à cette disposition technique, l'utilisation de l'appareil 1 conforme à l'invention s'avère particulièrement simple, puisqu'en un seul geste (mise en rotation manuelle de la poignée 15 reliée au moyen de commande 7) l'utilisateur est en mesure de commander le déplacement des mâchoires 5, 6 et du moyen de blocage 18.

Avantageusement, le moyen de blocage 18 coopère avec le moyen de commande 7 pour que le passage du moyen de commande 7 de sa position d'ouverture vers sa position de fermeture entraîne le passage du moyen de blocage 18 de sa position de libération à sa position de blocage. Dans ce cas préférentiel, la liaison fonctionnelle entre le moyen de commande 7 et le moyen de blocage 18 présente donc un caractère réversible, puisqu'elle permet de commander le passage du moyen de blocage 18 de sa position de blocage à sa position de libération et vice-versa.

Avantageusement, le moyen de commande 7 et le moyen de blocage 18 sont pourvus de moyens de coopération de force respectifs permettant l'entraînement mécanique du moyen de blocage 18 par le moyen de commande 7.

De façon préférentielle, le moyen de blocage 18 est pourvu d'au moins un ergot axial d'entraînement 19, 20, tandis que le moyen de commande 7 est pourvu d'au moins une lumière d'entraînement 21, 22 coopérant avec ledit ergot axial 19, 20 correspondant.

Tel que cela est représenté aux figures, le moyen de blocage 18 comprend avantageusement deux ergots 19, 20, diamétralement opposés relativement à l'axe Y-Y' et de préférence venu de matière avec le volet 180 formant moyen de blocage 18. Une lumière d'entraînement 21, 22, ménagée dans l'épaisseur du moyen de commande 7 est positionnée en regard de chacun des ergots 19, 20, de façon à ce que chaque lumière 21, 22 puisse engager l'ergot respectif 19, 20.

Ainsi, lorsque le moyen de commande 7 tourne, les lumières d'entraînement 21, 22 exercent une poussée circulaire sur les ergots axiaux 19, 20 correspondants, afin d'amener les encoches 18A, 18B soit à coopérer avec les pions 8, 9, soit à libérer ces derniers.

Avantageusement, la position de fermeture du moyen de blocage 18 est une position de rappel élastique. Cette caractéristique est obtenue par exemple à l'aide d'un ressort de torsion 23 monté relativement au siège du module 12A et au moyen de blocage 18 pour exercer un couple de rappel sur ce dernier. Comme cela sera expliqué plus en détails par la suite, cette mesure technique s'avère particulièrement avantageuse dans le cas, correspondant à la variante représentée aux figures, dans lequel le moyen de commande 7 est destiné à évoluer entre trois positions, à savoir une position déverrouillée, une position de décompression verrouillée et une position verrouillée étanche.

Dans la configuration déverrouillée de l'appareil 1, représentée aux figures 5 et 6, les pions 8, 9 sont écartés au maximum vers l'extérieur de l'appareil par les rampes correspondantes 10, 11, tandis que le moyen de blocage 18 est maintenu en position de libération par les lumières 21, 22 qui font office de butée pour les ergots 19, 20, empêchant ainsi le moyen de commande 18 d'être rappelé, sous l'effet du ressort 23, dans sa position de blocage.

L'appareil 1 conforme à l'invention comprend avantageusement un doigt de sécurité à l'ouverture / fermeture 24. Ledit doigt 24 est monté à coulissement axial entre d'une part une position basse de rappel, dans laquelle le doigt 24 autorise une fuite de vapeur hors de l'enceinte par une ouverture 24A ménagée dans le couvercle 3 et d'autre part une position haute, dans laquelle le doigt 24 vient obturer l'ouverture 24A de façon étanche, afin d'empêcher toute fuite de vapeur à l'extérieur. Dans la configuration déverrouillée représentée aux figures 5 et 6, le moyen de commande 7 est agencé pour empêcher le doigt de sécurité 24 d'atteindre sa position haute. A cette fin, le moyen de commande 7 comporte une languette périphérique 25 qui vient coiffer le doigt 24, l'empêchant ainsi de monter vers sa position haute.

Avantageusement, l'appareil 1 conforme à l'invention comprend également une soupape de régulation 26, montée à coulissement axial élastique entre une position basse de rappel, dans laquelle la soupape obture de façon étanche une ouverture 27 correspondante ménagée dans le couvercle 3 et d'autre part une position haute, dans laquelle ladite soupape 26 libère l'ouverture 27 pour permettre la fuite de vapeur à l'extérieur.

Dans la configuration déverrouillée représentée aux figures 5 et 6, la soupape de régulation 26 est maintenue en position haute grâce à une rampe de décompression 28 ménagée dans le moyen de commande 7 et s'étendant dans la direction axiale.

A partir de la configuration déverrouillée décrite ci-avant, l'utilisateur peut alors procéder, alors que le couvercle 3 est positionné sur la cuve 2, à une rotation (dans le sens horaire sur les figures) de la poignée 15 jusqu'à la configuration verrouillée étanche représentée aux figures 9 et 10, en passant, sans s'y arrêter, par la configuration de décompression verrouillée représentée aux figures 7 et 8, configuration de décompression verrouillée qui sera décrite plus en détails ultérieurement.

La rotation du moyen de commande 7 de la configuration de déverrouillage représentée aux figures 5 et 6 à la configuration de fermeture étanche représentée aux figures 9 et 10 entraîne un déplacement radial centripète des pions 8, 9, sous l'effet de la rotation des rampes d'entraînement obliques correspondantes 10, 11. La rotation du moyen de commande 7 va également permettre d'amener le moyen de blocage 18 à sa position de blocage, grâce au déplacement des lumières 21, 22. En effet, sous l'effet du ressort de torsion 23, les ergots 19, 20 vont rester plaqués contre la butée formée par la lumière correspondante 19, 20, et accompagner ainsi cette dernière sur sa trajectoire circulaire jusqu'à la position de blocage. De façon préférentielle, les lumières 19, 20 sont agencées pour que le moyen de blocage 18 atteigne sa position de blocage dès l'atteinte de la configuration de décompression déverrouillée, de sorte que les mâchoires sont verrouillées avant même que l'appareil ne puisse monter en pression. Dans cette position de blocage, les encoches 18A, 18B entourent les pions 8, 9 correspondants, de sorte que ces derniers ne peuvent plus se mouvoir radialement.

Le passage de la configuration déverrouillée représentée aux figures 5 et 6 à la configuration verrouillée étanche représentée aux figures 9 et 10 engendre également le passage en position haute du doigt de sécurité 24, sous l'effet d'une rampe de fermeture 29 ménagée sur le moyen de commande 7.

Le passage de la configuration déverrouillée à la configuration verrouillée étanche permet aussi de dégager la soupape de régulation 26 de l'action de la rampe 28, de sorte que la soupape 26 retourne dans sa position de rappel étanche, tout en conservant la faculté, si les conditions de pression à l'intérieur de l'enceinte l'imposent, de remonter vers sa position haute de fuite.

La cuisson des aliments peut alors avoir lieu.

Lorsque l'utilisateur souhaite ouvrir le couvercle 3, il lui suffit d'opérer une première rotation (en sens anti-horaire sur les figures) de la poignée 15 pour atteindre la configuration de décompression verrouillée représentée aux figures 7 et 8. Dans cette configuration, le doigt de sécurité 24 n'est plus soumis à l'action de la rampe de fermeture 29, et est libre, si les conditions de pression à l'intérieur de l'enceinte le permettent, de redescendre vers sa position basse de fuite. La soupape de régulation 26 se trouve quant à elle sensiblement à mi-parcours de la rampe 28, ce qui a pour effet de générer une fuite calibrée par l'orifice 27, fuite permettant la décompression de l'appareil.

Quant au moyen de blocage 18, il est resté dans une position identique à celle qu'il occupait dans la configuration verrouillée étanche. En effet, les lumières d'entraînement 21, 22 sont agencées et dimensionnées de telle sorte qu'elles n'engagent pas les ergots correspondants 19, 20 lorsque le moyen de commande 7 effectue son déplacement rotatif de la configuration verrouillée étanche à la configuration de décompression verrouillée. Le moyen de blocage 18 reste donc maintenu plaqué contre les pions 8, 9 sous l'effet du couple de rappel exercé par le ressort de torsion 23.

Lorsque la décompression est suffisante pour que l'utilisateur puisse ouvrir le couvercle en toute sécurité, le doigt de sécurité retombe dans sa position basse. L'utilisateur, grâce à une fenêtre ménagée dans le capot 12B visualise la descente du doigt de sécurité 24 et sait alors qu'il est en mesure de poursuivre la rotation de la poignée 15 (dans le sens anti-horaire sur les figures) jusqu'à l'atteinte de la configuration déverrouillée. On notera que tant que le doigt de sécurité 24 n'est pas descendu, toute rotation du moyen de commande 7 dans la position déverrouillée est impossible car ledit doigt 24 forme une butée d'arrêt pour la languette 25, et donc pour le moyen de commande 7.

Lors du passage de la configuration de décompression verrouillée représentée aux figures 7 et 8 à la configuration déverrouillée représentée aux figures 5 et 6, les lumières d'entraînement 21, 22 engagent le moyen de blocage 18 pour le ramener vers sa position de libération, dégageant ainsi les pions 8, 9. Simultanément, sous l'effet de la rotation des rampes 10, 11, les pions 8, 9 sont déplacés en translation radiale centrifuge, ce qui a pour effet d'ouvrir les mâchoires 5, 6.

Avantageusement, le maintien de l'appareil de cuisson dans une configuration déterminée (configuration déverrouillée, configuration verrouillée étanche ou configuration de décompression verrouillée) est réalisé par le blocage de la poignée 15 relativement au capot 12B.

De façon préférentielle, ce blocage est réalisé par la coopération d'un picot ménagé sur le capot 12B avec des conformations concaves de formes correspondantes ménagées sur la poignée 15, chaque conformation concave correspondant à une configuration prédéterminée.

La poignée 15 peut ainsi tourner relativement au capot 12B jusqu'à ce que le picot se trouve en regard d'une conformation concave et s'introduise dans cette dernière, bloquant ainsi toute rotation du moyen de commande 7. La coopération du picot et de la conformation concave provoque de plus un cliquetis qui signale à l'utilisateur qu'il a atteint une configuration prédéterminée. Pour quitter une configuration prédéterminée, il suffit à l'utilisateur d'exercer un effort de rotation suffisant pour forcer le picot à s'extraire de la conformation concave correspondante.

En définitive, l'invention permet à l'utilisateur, à partir d'un moyen de commande 7 unique, de commander un grand nombre de fonctionnalités, dont notamment le verrouillage / déverrouillage et le blocage du moyen de verrouillage / déverrouillage.

## Revendications

1. - Appareil domestique (1) de cuisson d'aliments sous pression comprenant :
- une cuve (2) et un couvercle (3) destiné à être rapporté et verrouillé sur ladite cuve (2) pour former une enceinte de cuisson sensiblement étanche,
- un moyen de verrouillage / déverrouillage (4) du couvercle (3) relativement à la cuve (2), monté mobile sur le couvercle (3) entre d'une part une position de verrouillage et d'autre part une position de déverrouillage,
- un moyen de commande (7) du déplacement du moyen de verrouillage / déverrouillage (4), monté mobile entre d'une part au moins une position d'ouverture correspondant à la position de déverrouillage du moyen de verrouillage / déverrouillage (4) et d'autre part au moins une position de fermeture correspondant à la position de verrouillage du moyen de verrouillage / déverrouillage (4),
- un moyen de blocage (18), monté mobile entre d'une part une position de blocage du moyen de verrouillage / déverrouillage (4) en position de verrouillage et d'autre part une position de libération du moyen de verrouillage / déverrouillage (4) autorisant le moyen de verrouillage / déverrouillage (4) à atteindre sa position de déverrouillage,
ledit appareil (1) étant **caractérisé en ce que** ledit moyen de blocage (18) coopère avec le moyen de commande (7) pour que le déplacement du moyen de commande (7) de sa position de fermeture vers sa position d'ouverture entraîne le passage du moyen de blocage (18) de sa position de blocage à sa position de libération.

2. - Appareil (1) selon la revendication 1 **caractérisé en ce que** la position de blocage du moyen de blocage (18) est une position de rappel élastique.

3. - Appareil (1) selon la revendication 1 ou 2 **caractérisé en ce que** le moyen de verrouillage / déverrouillage (4) est monté en translation radiale sur le couvercle (3).

4. - Appareil (1) selon la revendication 3 **caractérisé en ce que** le moyen de verrouillage / déverrouillage (4) comprend au moins une mâchoire (5, 6) ou un segment.

5. - Appareil (1) selon l'une des revendications 1 à 4 **caractérisé en ce que** le moyen de commande (7) est monté à rotation sur le couvercle (3) selon un premier axe de rotation (X-X').

6. - Appareil (1) selon l'une des revendications 1 à 5 **caractérisé en ce que** le moyen de blocage (18) est monté à rotation sur le couvercle (3) selon un deuxième axe de rotation (Y-Y').

7. - Appareil (1) selon les revendications 5 et 6 **caractérisé en ce que** l'enceinte de cuisson présente sensiblement un axe vertical de symétrie (Z-Z'), le premier et le deuxième axes de rotation (X-X', Y-Y') étant sensiblement parallèles audit axe vertical de symétrie (Z-Z').

8. - Appareil (1) selon l'une des revendications 1 à 7 **caractérisé en ce que** ledit moyen de blocage (18) coopère avec le moyen de commande (7) pour que le passage du moyen de commande (7) de sa position d'ouverture vers sa position de fermeture entraîne le passage du moyen de blocage de sa position de libération à sa position de blocage.

9. - Appareil (1) selon l'une des revendications 1 à 8 **caractérisé en ce que** le moyen de commande (7) et le moyen de blocage (18) sont pourvus de moyens de coopération de force respectifs permettant l'entraînement mécanique du moyen de blocage (18) par le moyen de commande (7).

10. - Appareil (1) selon la revendication 9 **caractérisé en ce que** le moyen de blocage (18) est pourvu d'au moins un ergot axial d'entraînement (19, 20), tandis que le moyen de commande (7) est pourvu d'au moins une lumière d'entraînement (21, 22) coopérant avec ledit ergot axial (19, 20) correspondant.

11. - Appareil (1) selon l'une des revendications 1 à 10 **caractérisé en ce que** le moyen de verrouillage / déverrouillage (4) comprend au moins un pion d'entraînement (8, 9), tandis que le moyen de commande (7) comprend au moins une rampe d'entraînement (10, 11) coopérant avec ledit pion d'entraînement correspondant (8, 9).

12. - Appareil (1) selon l'une des revendications 1 à 11 **caractérisé en ce que** le moyen de verrouillage / déverrouillage (4) comprend au moins deux bras indépendants (5A, 6A) positionnés sur le couvercle (3) de façon sensiblement diamétralement opposée lorsque le moyen de verrouillage / déverrouillage (4) se trouve en position de verrouillage, le moyen de blocage (18) étant agencé pour assurer, lorsqu'il se trouve en position de blocage et tandis que le moyen de verrouillage / déverrouillage (4) se trouve en position de verrouillage, une liaison mécanique entre lesdits deux bras (5A, 6A) pour les bloquer en position.

13. - Appareil (1) selon les revendications 11 et 12 **caractérisé en ce que** le moyen de blocage (18) est muni d'au moins deux encoches de blocage (18A, 18B) destinées à coopérer avec les pions d'entraînement (8, 9) du moyen de verrouillage / déverrouillage.

14. - Appareil (1) selon l'une des revendications 1 à 13 **caractérisé en ce que** le moyen de blocage (18) est réalisé en un matériau métallique, tandis que le moyen de commande (7) est réalisé en matière plastique.

15. - Appareil (1) selon l'une des revendications 1 à 14 **caractérisé en ce que** le moyen de blocage (18) et le moyen de commande (7) sont montés de manière superposée selon un axe de rotation commun (X-X', Y-Y').

16. - Appareil (1) selon l'une des revendications 1 à 15 **caractérisé en ce qu'**il comprend une poignée de commande (15) solidaire du moyen de commande (7).

17. - Appareil (1) selon l'une des revendications 1 à 16 **caractérisé en ce que** la cuve (2) et le couvercle (3) sont conçus pour former une enceinte à couvercle rentrant.

18. - Apppareil (1) selon l'une des revendications 1 à 17 **caractérisé en ce qu'**il est constitué par un autocuiseur.

## Claims

1. Domestic appliance (1) for cooking food under pressure, comprising:
- a vessel (2) and a lid (3) which is designed to be fitted on and locked to said vessel (2) so as to form a substantially sealed cooking chamber,
- a locking/unlocking means (4) for locking/unlocking the lid (3) relative to the vessel (2), said locking/unlocking means being mounted to move on the lid (3) between on the one hand a locked position and on the other hand an unlocked position,
- a control means (7) for controlling the displacement of the locking/unlocking means (4), said control means being mounted to move between on the one hand at least one open position corresponding to the unlocked position of the locking/unlocking means (4) and on the other hand at least one closed position corresponding to the locked position of the locking/unlocking means (4),
- a blocking means (18) which is mounted to move between on the one hand a position in which it blocks the locking/unlocking means (4) in the locked position and on the other hand a position in which it releases the locking/unlocking means (4), thereby allowing the locking/unlocking means (4) to reach its unlocked position,
said appliance (1) being **characterised in that** said blocking means (18) cooperates with the control means (7) so that the displacement of the control means (7) from its closed position to its open position causes the blocking means (18) to move from its blocking position to its release position.

2. Appliance (1) according to claim 1, **characterised in that** the blocking position of the blocking means (18) is a resilient return position.

3. Appliance (1) according to claim 1 or 2, **characterised in that** the locking/unlocking means (4) is mounted in radial translation on the lid (3).

4. Appliance (1) according to claim 3, **characterised in that** the locking/unlocking means (4) comprises at least one jaw (5, 6) or one segment.

5. Appliance (1) according to one of claims 1 to 4, **characterised in that** the control means (7) is mounted to rotate on the lid (3) about a first axis of rotation (X-X').

6. Appliance (1) according to one of claims 1 to 5, **characterised in that** the blocking means (18) is mounted to rotate on the lid (3) about a second axis of rotation (Y-Y').

7. Appliance (1) according to claims 5 and 6, **characterised in that** the cooking chamber has substantially a vertical axis of symmetry (Z-Z'), the first and the second axes of rotation (X-X', Y-Y') being substantially parallel to said vertical axis of symmetry (Z-Z').

8. Appliance (1) according to one of claims 1 to 7, **characterised in that** said blocking means (18) cooperates with the control means (7) so that the movement of the control means (7) from its open position to its closed position causes the blocking means to move from its release position to its blocking position.

9. Appliance (1) according to one of claims 1 to 8, **characterised in that** the control means (7) and the blocking means (18) are provided with respective force cooperation means which allow the mechanical entrainment of the blocking means (18) by the control means (7).

10. Appliance (1) according to claim 9, **characterised in that** the blocking means (18) is provided with at least one axial entrainment protrusion (19, 20) while the control means (7) is provided with at least one entrainment opening (21, 22) which cooperates with said corresponding axial protrusion (19, 20).

11. Appliance (1) according to one of claims 1 to 10, **characterised in that** the locking/unlocking means (4) comprises at least one entrainment pin (8, 9) while the control means (7) comprises at least one entrainment ramp (10, 11) which cooperates with said corresponding entrainment pin (8, 9).

12. Appliance (1) according to one of claims 1 to 11, **characterised in that** the locking/unlocking means (4) comprises at least two independent arms (5A, 6A) which are positioned on the lid (3) in such a way that they are substantially diametrically opposed when the locking/unlocking means (4) is in the locked position, the blocking means (18) being arranged so as to ensure, when it is in the blocking position and while the locking/unlocking means (4) is in the locked position, a mechanical connection between said two arms (5A, 6A) so as to block them in position.

13. Appliance (1) according to claims 11 and 12, **characterised in that** the blocking means (18) is provided with at least two blocking notches (18A, 18B) which are designed to cooperate with the entrainment pins (8, 9) of the locking/unlocking means.

14. Appliance (1) according to one of claims 1 to 13, **characterised in that** the blocking means (18) is made of a metal material while the control means (7) is made of a plastic material.

15. Appliance (1) according to one of claims 1 to 14, **characterised in that** the blocking means (18) and the control means (7) are mounted in a superposed manner about a common axis of rotation (X-X', Y-Y').

16. Appliance (1) according to one of claims 1 to 15, **characterised in that** it comprises a control handle (15) integral with the control means (7).

17. Appliance (1) according to one of claims 1 to 16, **characterised in that** the vessel (2) and the lid (3) are designed so as to form a chamber with a reentrant lid.

18. Appliance (1) according to one of claims 1 to 17, **characterised in that** it consists of a pressure cooker.

## Patentansprüche

1. - Haushaltsgerät (1) zum Kochen von Nahrungsmitteln unter Druck, umfassend:
- einen Behälter (2) und einen Deckel (3), der dazu vorgesehen ist, dass er auf den Behälter (2) aufgesetzt und auf diesem verriegelt wird, um ein im Wesentlichen dichtes Kochgefäß zu bilden,
- ein Mittel zur Verriegelung / Entriegelung (4) des Deckels (3) relativ zum Behälter (2), welches zwischen einerseits einer Verriegelungsstellung und andererseits einer Entriegelungsstellung beweglich auf dem Deckel (3) angebracht ist,
- ein Betätigungsmittel (7) für die Verschiebung des Verriegelungs- /Entriegelungsmittels (4), welches zwischen einerseits wenigstens einer Öffnungsstellung, die der Entriegelungsstellung des Verriegelungs- /Entriegelungsmittels (4) entspricht, und andererseits wenigstens einer Schließstellung, die der Verriegelungsstellung des Verriegelungs- /Entriegelungsmittels (4) entspricht, beweglich angebracht ist,
- ein Sperrmittel (18), das zwischen einerseits einer Stellung der Sperrung des Verriegelungs- / Entriegelungsmittels (4) in Verriegelungsstellung und andererseits einer Stellung der Freigabe des Verriegelungs- /Entriegelungsmittels (4), welche es dem Verriegelungs- /Entriegelungsmittels (4) erlaubt, seine Entriegelungsstellung zu erreichen, beweglich angebracht ist.
wobei das Gerät (1) **dadurch gekennzeichnet ist, dass** das Sperrmittel (18) mit dem Betätigungsmittel (7) so zusammenwirkt, dass die Verschiebung des Betätigungsmittels (7) aus seiner Schließstellung in seine Öffnungsstellung den Übergang des Sperrmittels (18) von seiner Sperrstellung zu seiner Freigabestellung bewirkt.

2. - Gerät (1) nach Anspruch 1, **dadurch gekennzeichnet, dass** es sich bei der Sperrstellung des Sperrmittels (18) um eine Stellung zur elastischen Rückholung handelt.

3. - Gerät (1) nach Anspruch 1 oder 2, **dadurch gekennzeichnet, dass** das Verriegelungs- / Entriegelungsmittel (4) in radialer Verschiebung auf dem Deckel (3) angebracht ist.

4. - Gerät (1) nach Anspruch 3, **dadurch gekennzeichnet, dass** das Verriegelungs-/ Entriegelungsmittel (4) wenigstens eine Backe (5, 6) oder ein Segment umfasst.

5. - Gerät (1) nach einem der Ansprüche 1 bis 4, **dadurch gekennzeichnet, dass** das Betätigungsmittel (7) entlang einer ersten Drehachse (X-X') drehbar auf dem Deckel (3) angebracht ist.

6. - Gerät (1) nach einem der Ansprüche 1 bis 5, **dadurch gekennzeichnet, dass** das Sperrmittel (18) entlang einer zweiten Drehachse (Y-Y') drehbar auf dem Deckel (3) angebracht ist.

7. - Gerät (1) nach den Ansprüchen 5 und 6, **dadurch gekennzeichnet, dass** das Kochgefäß im Wesentlichen eine vertikale Symmetrieachse (Z-Z') aufweist,
wobei die erste und die zweite Drehachse (X-X', Y-Y') jeweils im Wesentlichen parallel zu dieser vertikalen Symmetrieachse (Z-Z') sind.

8. - Gerät (1) nach einem der Ansprüche 1 bis 7, **dadurch gekennzeichnet, dass** das Sperrmittel (18) mit dem Betätigungsmittel (7) so zusammenwirkt, dass der Übergang des Betätigungsmittels (7) aus seiner Öffnungsstellung in seine Schließstellung den Übergang des Sperrmittels von seiner Freigabestellung zu seiner Sperrstellung bewirkt.

9. - Gerät (1) nach einem der Ansprüche 1 bis 8, **dadurch gekennzeichnet, dass** das Betätigungsmittel (7) und das Sperrmittel (18) über jeweilige, zusammenwirkende Mittel verfügen, welche die mechanische Mitnahme des Sperrmittels (18) durch das Betätigungsmittel (7) ermöglichen.

10. - Gerät (1) nach Anspruch 9, **dadurch gekennzeichnet, dass** das Sperrmittel (18) über wenigstens einen axialen Mitnehmervorsprung (19, 20) verfügt, während das Betätigungsmittel (7) über wenigstens eine Mitnehmeröffnung (21, 22) verfügt, die mit dem entsprechenden axialen Vorsprung (19, 20) zusammenwirkt.

11. - Gerät (1) nach einem der Ansprüche 1 bis 10, **dadurch gekennzeichnet, dass** das Verriegelungs- / Entriegelungsmittel (4) wenigstens einen Mitnehmerstift (8, 9) umfasst, während das Betätigungsmittel (7) wenigstens eine Mitnehmerrampe (10, 11) umfasst, die mit dem entsprechenden Mitnehmerstift (8, 9) zusammenwirkt.

12. - Gerät (1) nach einem der Ansprüche 1 bis 11, **dadurch gekennzeichnet, dass** das Verriegelungs- / Entriegelungsmittel (4) wenigstens zwei unabhängige Arme (5A, 6A) umfasst, die, wenn das Verriegelungs- / Entriegelungsmittel (4) sich in Verriegelungsstellung befindet, auf dem Deckel (3) auf im Wesentlichen diametral gegenüberliegende Weise positioniert sind, wobei das Sperrmittel (18) so ausgebildet ist, dass es, wenn es sich in Sperrstellung befindet und während das Verriegelungs- / Entriegelungsmittel (4) sich in Verriegelungstellung befindet, eine mechanische Verbindung zwischen den beiden Armen (5A, 6A) sicherstellt, um sie in ihrer Position zu arretieren.

13. - Gerät (1) nach den Ansprüchen 11 und 12, **dadurch gekennzeichnet, dass** das Sperrmittel (18) mit wenigstens zwei Sperrauskerbungen (18A, 18B) ausgestattet ist, die dazu vorgesehen sind, mit den Mitnehmerstiften (8, 9) des Verriegelungs-/ Entriegelungsmittels zusammenzuwirken.

14. - Gerät (1) nach einem der Ansprüche 1 bis 13, **dadurch gekennzeichnet, dass** das Sperrmittel (18) aus einem metallischen Werkstoff ausgebildet ist, während das Betätigungsmittel (7) aus einem Plastikmaterial ausgebildet ist.

15. - Gerät (1) nach einem der Ansprüche 1 bis 14, **dadurch gekennzeichnet, dass** das Sperrmittel (18) und das Betätigungsmittel (7) entlang einer gemeinsamen Drehachse (X-X', Y-Y') übereinanderliegend angebracht sind.

16. - Gerät (1) nach einem der Ansprüche 1 bis 15, **dadurch gekennzeichnet, dass** es einen Betätigungsgriff (15) umfasst, der mit dem Betätigungsmittel (7) fest verbunden ist.

17. - Gerät (1) nach einem der Ansprüche 1 bis 16, **dadurch gekennzeichnet, dass** der Behälter (2) und der Deckel (3) dafür ausgelegt sind, dass sie ein Gefäß mit rückspringendem Deckel bilden.

18. - Gerät (1) nach einem der Ansprüche 1 bis 17, **dadurch gekennzeichnet, dass** es aus einem Schnellkochtopf besteht.
